**Europäisches Patentamt**

**European Patent Office**

**Office européen des brevets**

(19)

(11) Veröffentlichungsnummer: **0 377 140 B1**

(12) # EUROPÄISCHE PATENTSCHRIFT

(45) Veröffentlichungstag der Patentschrift:
**30.10.91 Patentblatt 91/44**

(51) Int. Cl.⁵: **F24J 2/14, F24J 2/52, F16L 51/03**

(21) Anmeldenummer: **89122936.1**

(22) Anmeldetag: **12.12.89**

(54) **Anschlussanordnung für den Wärmeträger von Solaranlagen.**

(30) Priorität: **05.01.89 DE 3900203**

(43) Veröffentlichungstag der Anmeldung:
**11.07.90 Patentblatt 90/28**

(45) Bekanntmachung des Hinweises auf die
Patenterteilung:
**30.10.91 Patentblatt 91/44**

(84) Benannte Vertragsstaaten:
**DE ES FR GR IT**

(56) Entgegenhaltungen:
**DE-A- 3 522 334**
**DE-A- 3 643 038**
**US-A- 4 078 549**
**US-A- 4 159 629**

(73) Patentinhaber: **Witzenmann GmbH Metallschlauch-Fabrik Pforzheim Östliche Karl-Friedrich-Strasse 134 W-7530 Pforzheim (DE)**

(72) Erfinder: **Der Erfinder hat auf seine Nennung verzichtet**

(74) Vertreter: **Lemcke, Rupert, Dipl.-Ing. et al Patentanwälte Dipl.-Ing. R. Lemcke Dr.-Ing. H.J. Brommer Bismarckstrasse 16 Postfach 4026 W-7500 Karlsruhe 1 (DE)**

## Beschreibung

Die Erfindung betrifft eine Anschlußanordnung für den Wärmeträger von Solaranlagen mit einem entsprechend dem Sonnenstand um eine im wesentlichen horizontale Achse verschwenkbaren Spiegelsystem zur Konzentration der Sonnenstrahlen auf eine dem Spiegelsystem in dessen Brennachse gegenüberliegende und mit dem Spiegelsystem entsprechend dem Tagesablauf auf einem Kreisbogen schwenkende Leitung, die von dem Wärmeträger durchströmt und über einen Welleschlauch an ein mit seinem Ende im wesentlichen radial auf die Schwenkachse zu gerichtetes Leitungselement angeschlossen ist, wobei die Krümmung des Wellschlauches im Verlauf der Schwenkbewegung des Spiegelsystems das Vorzeichen wechselt und wobei der Wellschlauch axial abgestützt und von einer Wärmeisolierung umgeben ist.

Bei derartigen bekannten Anlagen wird das Spiegelsystem automatisch dem Sonnenstand nachgeführt, wobei ein Schwenkwinkel von etwa 180 Grad zurückgelegt werden muß.

Während der Nacht wird das spiegelsystem in eine außerhalb dieses Schwenkwinkels angeordnete Totpunktlage geschwenkt, so daß die Spiegelfläche zumindest schräg nach unten weist, damit sich keine Niederschläge, Staub oder Regen und dergleichen auf der Spiegelfläche absetzen können.

Unter Berücksichtigung dieser Totpunktlage wird heutzutage ein Gesamtdrehwinkel des Spiegelsystems etwa im Bereich von 200-270° gefordert. Dieser Winkel muß während 24 Stunden zunächst in der einen Drehrichtung und danach in der anderen Drehrichtung durchfahren werden. Der gleiche Drehwinkel ergibt sich für die mit dem Spiegelsystem verbundene Leitung, in der der von den Sonnenstrahlen aufgeheizte Wärmeträger zirkuliert. Da sich auf diese Weise zwischen der Leitung und dem aus der Solaranlage herausführenden Leitungselement eine entsprechende Relativbewegung ergibt, sind diese beiden Teile durch einen Wellschlauch miteinander verbunden, an den erhebliche Anforderungen gestellt werden, zumal der Wärmeträger unter einem hohen Druck von beispielsweise 40 bar bei einer Temperatur von 300 bis 400 Grad Celsius steht.

Die DE-OS 3643038, von deren Gegenstand eingangs ausgegangen wurde, hat erkannt, daß der Wellschlauch, der bei der Bewegung des Spiegelsystems über dessen gesamten Drehwinkel seine Krümmungsrichtung ändert, bei dieser Änderung von der einen Krümmungsrichtung in die andere Krümmungsrichtung schlagartig umschnappt, wobei dieser Umschnappvorgang bei unterschiedlichen Winkelstellungen des Spiegelsystems stattfindet je nach dem, ob dieses sich während des Tages beim Vorlauf oder am Ende des Tages beim Rücklauf in die Nachtposition befindet. Dieses Umschnappen wurde als besondere Belastung des Wellschlauches und als Grund für dessen vorzeitiges Ausfallen festgestellt. Entsprechend sind in der DE-OS durch besondere Ausbildung des Schlauches Maßnahmen getroffen, um dessen Widerstandsfähigkeit gerade durch die sich mit dem Umschnappen verbindenden Belastungen zu vergrößern.

Die Praxis hat jedoch gezeigt, daß auch auf diese Weise die geforderte Lebensdauer des Wellschlauches nicht annähernd erreichbar ist, obwohl auf der anderen Seite durch die besondere Wellschlauchgestaltung ein in seiner Herstellung recht aufwendiges und kostspieliges Bauelement eingesetzt wurde.

Aufgabe der Erfindung ist es, eine Anschlußanordnung der eingangs genannten Art so zu gestalten, daß Sie sowohl eine erhebliche Herabsetzung der Länge als auch der Beanspruchung des Wellschlauches ergibt, so daß neben einer räumlichen Verkleinerung der Anschlußanordnung übliche Wellschlauchkonstruktionen eingesetzt werden können, wie Sie für die hier im Vordergrund stehenden hohen und höchsten Druck- und Temperaturbelastungen verfügbar sind.

Dabei liegt der Erfindung die Erkenntnis zugrunde, daß die Problemlösung grundsätzlich nicht durch eine aufwendigere Gestaltung des Wellschlauches gelingen kann sondern in einer Herabsetzung dessen Belastung gesucht werden muß. Da die Druck- und Temperaturbelastung des Wellschlauches als vorgegebene Größe nicht veränderbar ist, kann eine Verminderung der Wellschlauchbelastung nur durch eine aus einem geänderten Bewegungsablauf resultierende günstigere Kinematik gefunden werden. Auf dieser Basis liegt der Erfindung die weitere Erkenntnis zugrunde, daß im bekannten Falle in den Endbereichen der Schwenkbewegung des Spiegelsystems der Krümmungsverlauf des Wellschlauches Wendepunkte und verhältnismäßig kleine Radien der Abschnitte seines Krümmungsverlaufes aufweist, die den Wellschlauch in besonderem Maße einer Biegewechselbelastung aussetzen. Ursache hierfür ist der Umstand, daß ausgehend von der etwa mit der Mittagsposition des Spiegelsystems sich ergebenden gestreckten Lage des Wellschlauches, die dessen Länge zwischen Leitung und Leitungselement bestimmt, die Wellschlauchlänge bei den Grenzbereichen des zu durchlaufenden Schwenkwinkels auf einem verhältnismäßig geringen Abstand zwischen Leitung und Ende des Leitungselementes untergebracht werden muß.

Das damit einhergehende Auftreten der genannten Wendepunkte bedingt jedoch eine verhältnismäßig große Schlauchlänge, um den Wellschlauch nicht durch zu kleine Biegeradien der einzelnen Streckenabschnitte zu überlasten.

Aufgrund dieser Erkenntnisse ist bei einer Anschlußanordnung der eingangs genannten Art die vorstehend definierte Aufgabe erfindungsgemäß dadurch gelöst, daß die Leitung im Bereich der der Mittelstellung entsprechenden Schwenklage so auf dem Kreisbogen angeordnet ist, daß der Wellschlauch diametral durch die Schwenkachse gehend bis zum Ende des Leitungselementes verläuft, und daß das Ende des Leitungselementes im wesentlichen radial zur Schwenkachse verstellbar ist.

Durch diese erfindungsgemäßen Maßnahmen ist also grundsätzlich das Ende des Leitungselementes, an dem der Wellschlauch anzuschließen ist, hinsichtlich seiner Position veränderbar gestaltet, so daß es mit der Schwenkbewegung des Spiegelsystems ebenfalls eine Bewegung ausführen kann, die in den Endbereichen der Schwenkbewegung des Spiegelsystems eine bessere Unterbringung der Länge des Wellschlauches ermöglicht, indem das Endes des Leitungselementes von der Schwenkachse des Spiegelsystemes fortbewegt wird. Damit ergibt sich jedoch gleichzeitig eine wesentlich günstigere Relativlage der Anschlußflanschen von Leitung und Leitungselement zueinander, so daß bei den genannten Endbereichen des Schwenkwinkels des Spiegelsystems der Wellschlauch entlang einem einfachen Kreisbogen mit verhältnismäßig großem Radius verläuft und somit auch hier nur der normalen Belastung durch einfache Krümmung ausgesetzt ist, für die er üblicherweise hergestellt und ausgelegt ist. Daraus ergibt sich aber als besonders vorteilhafte Wirkung des Erfindungsgegenstandes, daß nunmehr der Wellschlauch verglichen mit dem bekannten Falle wesentlich kürzer, teilweise mehr als um die Hälfte kürzer ausgebildet werden kann, da durch den Fortfall der Wendepunkte im Krümmungsverlauf des Wellschlauches auch die Schlauchlängen fortfallen können, die sich ausgehend von dem Mittelbereich der Schlauchkrümmung nach den Wendepunkten an diesen anschließen. Dies führt nicht nur zu den sich mit einem kürzeren Wellschlauch verbindenden Ersparnissen, sondern auch zu einer wesentlichen räumlichen Verkleinerung der gesamten Anschlußanordnung.

Als besonders einfach und zweckmäßig hat es sich erwiesen, daß das Ende des Leitungselementes an einem im wesentlichen quer zu seiner Stellbewegung sich erstreckenden und gelenkig mit einem ortsfesten Leitungsanschluß verbundenen Schwenkarm in Form einer starren Rohrleitung angeordnet ist.

Von der Länge des Schwenkarmes und dessen möglichen Schwenkwinkel hängt der mögliche Stellweg des Endes des Leitungselementes radial zur Schwenkachse des Spiegelsystems ab und damit auch der Schwenkwinkel des Ende des Leitungselementes, den dieses über den radialen Stellweg ausführt. Je nach den in diesem Zusammenhang vorliegenden Gegebenheiten kann es zweckmäßig sein, daß der Wellschlauch mit dem Ende des Leitungselementes ebenfalls über ein Gelenk verbunden ist, um hier eine wenn auch geringe endständige Knickbelastung des Wellschlauches völlig zu vermeiden. Aus dem gleichen Grunde kann schließlich auch der Wellschlauch mit der mit dem Spiegelsystem um die Schwenkachse wandernden Leitung über ein Gelenk verbunden sein.

Die vorstehend angesprochenen konstruktiven Variationsmöglichkeiten erlauben ebenfalls eine Einflußnahme auf die Länge des Wellschlauches, wobei ein Gelenk zwischen Ende des Leitungselementes und Wellschlauch umso eher entfallen kann, je länger der Wellschlauch selbst ist.

In allen genannten Fällen, insbesondere für die Verbindung des Schwenkarmes mit dem ortsfesten Leitungsanschluß kann das Gelenk durch wenigstens einen Angularkompensator der an sich bekannten Art gebildet sein, wobei im Hinblick auf die im vorliegenden Zusammenhang geforderte absolute Dichtheit hier nur Bauformen in Frage kommen, bei denen die Ausbildung ebenfalls nach Art eines Wellschlauches vorliegt oder die wenigstens ein Element in Form eines ringgewellten Balges enthalten.

Es können je nach Auftreten der Belastung und Größe des aufzunehmenden Schwenkwinkels auch mehrere derartiger Angular-Kompensatoren miteinander kombiniert sein, wobei dann der einzelne bezüglich seines möglichen Schwenkwinkels durch Anschläge begrenzt sein kann, um auf diese Weise eine gleichmäßige Verteilung der durch den Schwenkwinkel bedingten Bewegungsgröße zu erreichen.

Ferner ist es zweckmäßig, daß die Bewegung des Schwenkarmes von der Schwenkachse des Spiegelsystems fort durch einen Anschlag begrenzt ist. Auf diese Weise läßt sich gerade für die am stärksten gekrümmten Positionen des Wellschlauches der Krümmungsverlauf auf den erwünschten Bogen einstellen, der im Idealfall genau einem Kreisbogen entspricht.

In Richtung auf den Anschlag wird sich der Schwenkarm normalerweise unter dem Einfluß der Schwerkraft bewegen. Zur Überwindung von Reibungsverlusten und sonstiger störender Einflüsse kann es jedoch hier vorteilhaft sein, daß der Schwenkarm zusätzlich in Richtung auf den Anschlag feder- oder gewichtsbelastet ist.

Was die Ausbildung des Wellschlauches betrifft, so können hier auch Bauformen nach den Ansprüchen 11 oder 12 zweckmäßig sein, um den Biegewiderstand zu verringern und damit die notwendige Schlauchlänge weiter zu verkürzen. Soweit hier Doppelschläuche angesprochen sind, versteht es sich von selbst, daß diese im Bereich der Anschlußverbindungen an ihren Enden wieder zusammengeführt werden.

Weitere Merkmale und Einzelheiten der Erfindung ergeben sich aus der nachfolgenden Beschreibung von Ausführungsformen, die auf der Zeichnung dargestellt sind.

In der Zeichnung zeigen :

Fig. 1    die vereinfachte Darstellung einer Solaranlage in verschiedenen Schwenklagen entsprechend dem Tagesablauf ;

Fig. 2       eine Gegenüberstellung zwischen bekannter und erfindungsgemäßer Anschlußanordnung ;

Fig. 3       einen Wellschlauch mit axialer Geflechtsabstützung, teilweise geschnitten ;

Fig. 4       einen Wellschlauch mit axialer Seilabstützung in geschnittener Teilansicht und

Fig. 5-7       einen Gelenkkompensator in mehreren, teilweise geschnittenen Ansichten.

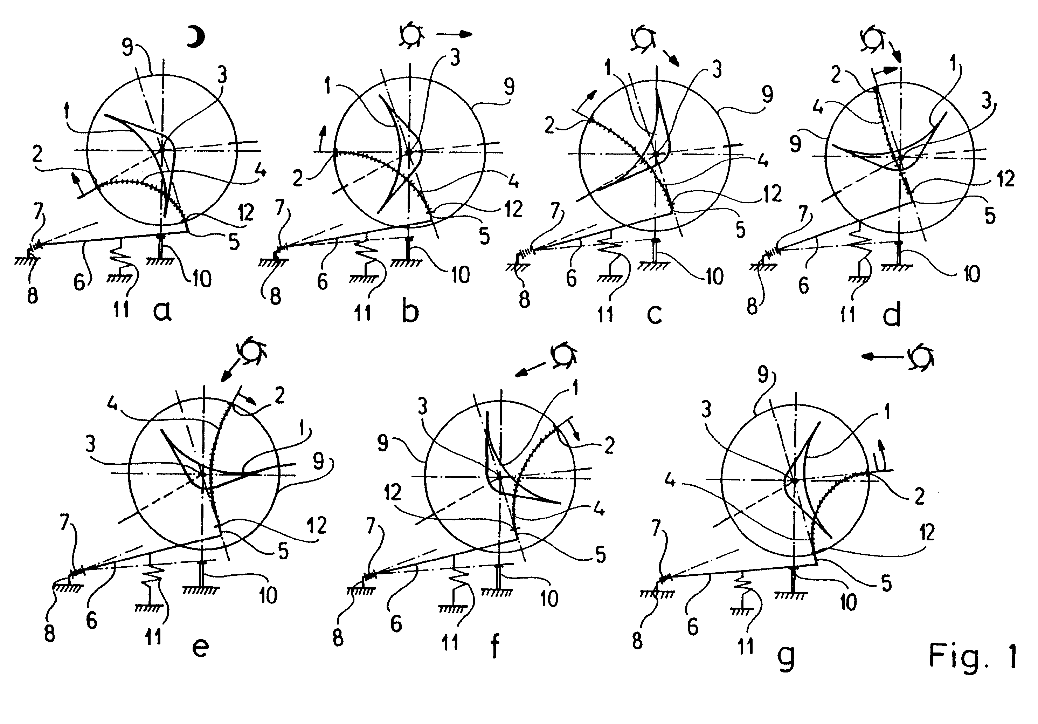

Fig. 1 zeigt in vereinfachter Darstellung eine Solaranlage in 7 verschiedenen Betriebsstellungen. Das verschwenkbare Spiegelsystem ist jeweils mit der Ziffer 1, die sich mit ihm drehende, vom Wärmeträger durchströmte Leitung mit 2 und die im wesentlichen horizontale Drehachse dieses Systems mit 3 bezeichnet.

Die Leitung 2 ist über einen flexiblen Wellschlauch 4 mit dem Ende eines Leitungselementes 5 verbunden, das im wesentlichen rechtwinklig an einem Schwenkarm 6 in Form einer starren Rohrleitung sitzt, die ihrerseits über ein absolut dichtes Rohrgelenk 7 mit einem ortsfesten Leitungsanschluß 8 verbunden ist.

Das so skizzierte System befindet sich gemäß Fig. 1a in der Nachtstellung, bei der das Spiegelsystem 1 derart angeordnet ist, daß seine Spiegelfläche nach schräg unten schaut und somit gegenüber äußeren Einflüssen durch Feuchtigkeit, Verschmutzung etc. weitgehend abgedeckt ist.

Gemäß den Fig. 1b bis 1g durchläuft nun dieses System ausgehend von der Nachtposition entsprechend dem Sonnenstand kontinuierlich die verschiedenen Tagespositionen, die mit dem Sonnenaufgang bei Fig. 1b beginnen und mit dem Sonnenuntergang bei Fig. 1g enden.

Dabei durchläuft das Spiegelsystem 1 nicht nur einen Drehwinkel von 180 Grad, wie er in etwa dem Bereich zwischen Sonnenaufgang und Sonnenuntergang entspricht, sondern dazu einen weiteren Drehwinkel, um in die aus Fig. 1a ersichtliche Nachtposition zu kommen, so daß sich insgesamt für das Solarsystem ein Schwenkwinkel im Bereich von 213° als gestellte Forderung ergibt.

Gleichermaßen schwenkt die Leitung 2 insgesamt einmal am Tag um diesen Bereich von 213° im Uhrzeigersinn und nach Sonnenuntergang in die in Fig. 1a dargestellte Nachtposition zurück, was eine entsprechend mitgeführte Biegebewegung des Wellschlauches 4 ergibt, die ihn jeden Tag aus der in Fig. 1a dargestellten, linksgerichteten Krümmung über die in Fig. 1d dargestellte gestreckte Lage in die aus Fig. 1e bis Fig. 1g dargestellte, nach rechts gekrümmte Lage und nach Sonnenuntergang daraus zurück wieder in die aus Fig. 1a ersichtliche Lage führt.

Damit nun bei dieser sich ändernden und auch ihre Drehrichtung umkehrenden Biegung des Wellschlauches 4 der Wellschlauch möglichst genau einen kreisbogenförmigen Verlauf zwischen Leitung 2 und Ende des Leitungselementes 5 einnehmen kann, ist das Leitungselement 5 im wesentlichen radial zur Schwenkachse 3 des aus Spiegelsystems 1 und Leitung 2 gebildeten Solarsystems verstellbar. Dies hat zur Folge, daß das Ende des Leitungselementes 5 unter Berücksichtigung der jeweiligen Krümmung des Wellschlauches 4 sowie der Länge des Wellschlauches mit Abstand der Bewegung folgen kann, die die Leitung 2 und damit das mit dieser Leitung 2 verbundene Ende des Wellschlauches 4 im Verlauf des Tages entlang der mit der Ziffer 9 versehenen Kreisbahn um die Drehachse 3 nimmt.

Es ist also so, daß der Wellschlauch 4 durch die Verstellbarkeit des Leitungselementes 5 für jede Schwenklage der Leitung 2 an beiden Enden Anschlußverhältnisse vorfindet, die ihm einen kreisbogenförmigen Verlauf zwischen diesen Anschlüssen erlauben, wobei andererseits unter Berücksichtigung der Länge des Wellschlauches 4 eine Nachführung des Endes des Leitungselementes 5 in soweit stattfindet, als das mit der Leitung 2 verbundene Ende des Wellschlauches 4 den Teil des Umlaufkreises 9 durchläuft, der dem Ende des Leitungselementes 5 bezüglich der Schwenkachse 3 diametral gegenüberliegt.

Die radial zur Schwenkachse 3 gegebene Stellmöglichkeit des Leitungselementes 5 ergibt sich, wie bereits angedeutet, durch dessen Anordnung am Ende des durch eine Rohrleitung gebildeten Schwenkarmes 6, wobei die Schwenkbeweglichkeit dieses Armes 6 durch einen Anschlag 10 nach unten zweckmäßigerweise derart begrenzt ist, daß der Wellschlauch 4 bei den in Fig. 1a und Fig. 1g gezeigten Schwenkpositionen eine der Kreisbogenform weitgehend entsprechende Krümmung aufweist. Soweit nicht zu erwarten ist, daß der Schwenkarm 6 die Anlage an den Anschlag 10 durch Einwirkung der Schwerkraft von selbst erreicht, kann zweckmäßigerweise eine Feder 11 vorgesehen sein, die den Schwenkarm 6 ständig in Richtung auf seine Anlage am Anschlag 10 belastet.

Die absolut dichte Gelenkverbindung zwischen Schwenkarm 6 und ortsfestem Leitungsanschluß 8 kann durch einen bekannten Gelenkkompensator gebildet sein oder aber auch durch einen kurzen Wellschlauch derart, wie er Grundlage des Wellschlauches 4 ist. Hier kommen je nach Umständen des Belastungsfalles auch aus mehreren Gelenkelementen zusammengesetzte Angular-Kompensatoren in Frage, bei denen die Winkelbeweglichkeit der einzelnen Kompensatorabschnitte zur gleichmäßigen Lastverteilung durch Anschläge begrenzt ist.

Je nach dem, welche Länge der Schwenkarm 6 aufweist und welche Kippbewegung sich daraus für das mit dem Wellschlauch 4 verbundene Ende des Leitungselementes 5 ergibt, kann es zweckmäßig sein, in dieser Verbindung bei 12 ebenfalls zusätzlich ein Leitungsgelenk in Form eines Angular-Kompensators vorzusehen, um an dieser Stelle eine örtliche Knickbelastung für den Wellschlauch 4 zu vermeiden. Das Gleiche kann je nach den Umständen des Einzelfalles für die Verbindung des Wellschlauches 4 mit der Leitung 2 gelten.

Wie aus Fig. 1 ersichtlich, ist es zweckmäßig, das Leitungselement 5 bzw. das mit dem Wellschlauch 4 verbundene Ende dieses Leitungselementes 5 im wesentlichen bei einer solchen Position anzuordnen, die der Leitung 2 in deren Mittagsposition bezüglich der Schwenkachse 3 diametral gegenüber angeordnet ist. Mit anderen Worten ausgedrückt entspricht diese Position in etwa der Mitte des insgesamt Schwenkwinkels, den die Leitung 2 zwischen den aus Fig. 1a und Fig. 1g ersichtlichen Schwenkpositionen überstreicht.

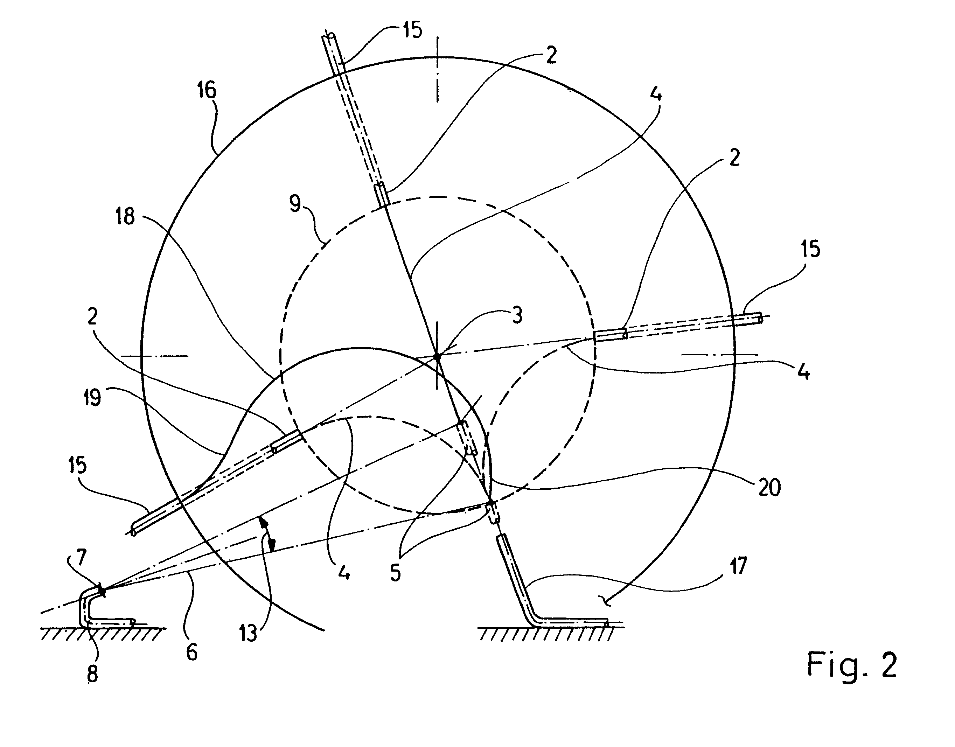

Fig. 2 zeigt noch einmal in vergrößerter Darstellung eine Gegenüberstellung der anhand der Fig. 1 erläuterten Konstruktion mit der in der Beschreibungseinleitung erläuterten bekannten Bauweise.

So ist entlang des über den Tagesablauf durchfahrenen Kreisbogens 9 noch einmal die Leitung 2 in der linken, der Nachtposition entsprechenden, so wie der rechten, der Sonnenuntergangsposition entsprechenden Schwenklage gezeigt, wobei von ihr ausgehend der Wellschlauch 4 jeweils in gestrichelter Darstellung veranschaulicht ist. Zwischen diesen beiden Positionen befindet sich die Leitung 2 in der im wesentlichen in der Mittagsstellung befindlichen oberen Position, von der ausgehend der Wellschlauch 4 in durchgezogener Form diametral durch die Schwenkachse 3 gehend bis zum Ende des Leitungselementes 5 verläuft.

Wie aus Fig. 2 ersichtlich, ist das Ende des Leitungselementes 5 in zwei gegenüber der Schwenkachse 3 unterschiedlichen Radialstellungen gezeigt, die die radiale Stellmöglichkeit dieses Leitungselementes gegenüber der Schwenkachse 3 veranschaulichen. Der durch ein Rohr gebildete Schwenkarm 6 ist nur angedeutet einschließlich des Gelenkes 7 und dem ortsfesten Leitungsanschluß 8, wobei jedoch der durch den Doppelpfeil 13 verdeutlichte Schwenkwinkel den beiden vorstehend erwähnten unterschiedlichen Radialpositionen des Leitungselementes 5 je nach Tagesstellung der Leitung 2 auf dem Kreisbogen 9 entspricht.

Demgegenüber ist ersichtlich, daß bei dem durch die DE-OS 3643038 bekannten Fall sich die dortige Leitung 15 auf einem Kreisbogen 16 entsprechend dem Tagesablauf bewegt, dessen Radius etwa doppelt so groß ist wie der des Kreisbogens 9. Entsprechend ist auch der mit dem im bekannten Falle ortsfest angebrachten Leitungselement 17 verbundene Wellschlauch 18 etwa doppelt so lang wie der Wellschlauch 4, was im wesentlichen seinen Grund darin hat, daß in den am weitesten gekrümmten Schwenkpositionen der Wellschlauch 18 über seinen Krümmungsverlauf Wendepunkte 19 und 20 aufweist, von denen ausgehend der Wellschlauch eine zusätzliche Länge benötigt, um hinsichtlich seiner Biegebeanspruchung nicht überbelastet zu werden.

Fig. 2 verdeutlicht damit am ehesten, in welchen Umfange gegenüber den bekannten Bauformen durch den Erfindungsgegenstand eine mechanische Entlastung des Wellschlauches dadurch stattfindet, daß der Wellschlauch nunmehr nur noch im wesentlichen entlang eines Kreisbogens gekrümmt wird. Darüberhinaus zeigt die Gegenüberstellung, daß in Folge dieser mechanischen Entlastung des Wellschlauches die Gesamtkonstruktion in ihrem Umfange wesentlich reduziert werden kann, was am ehesten durch die Größendifferenz zwischen den Kreisen 9 und 16 deutlich wird. Diese Differenz in der Größenordnung wirkt sich natürlich auf die Dimensionierung der gesamten Anschlußgestaltung der Solaranlage aus, indem nunmehr in soweit auf die Länge des Wellschlauches nur noch in erheblich geringerem Umfange Rücksicht genommen werden muß.

Dabei spielt bezüglich der Differenz der beiden Kreise 9 und 16 selbstverständlich eine Rolle, wo für die Leitung 2 der Brennpunkt des Spiegelsystems liegt. Auf die Positionierung dieses Brennpunktes braucht jedoch mit dem Wellschlauch 4 bzw. dessen Länge nicht unbedingt Rücksicht genommen zu werden, denn es besteht ohne weiteres die Möglichkeit, eine gewisse Radialdifferenz zwischen Leitung 2 und dem Kreisbogen einer notwendigen Länge des Wellschlauches 4 durch ein Stück Rohrleitung zu überbrücken, das in Radialrichtung angeordnet die Leitung 2 mit dem Ende des Wellschlauches 4 verbindet.

Was die Gestaltung des Wellschlauches an sich betrifft, so ist bereits eingangs betont worden, daß hierfür nunmehr normale Konstruktionen mit Umflechtung und Wärmeisolierung ohne weiteres verwendet werden können, soweit sie auf die hier auftretenden hohen Drücke und Temperaturen ausgelegt sind. Dabei besteht nunmehr ohne weiteres die Möglichkeit, die Druckbelastbarkeit des Wellschlauches bis auf 160 bar und darüber zu steigern, ohne das durch den besonderen Einsatz bei Solaranlagen zusätzliche Beschränkungen auftreten würden.

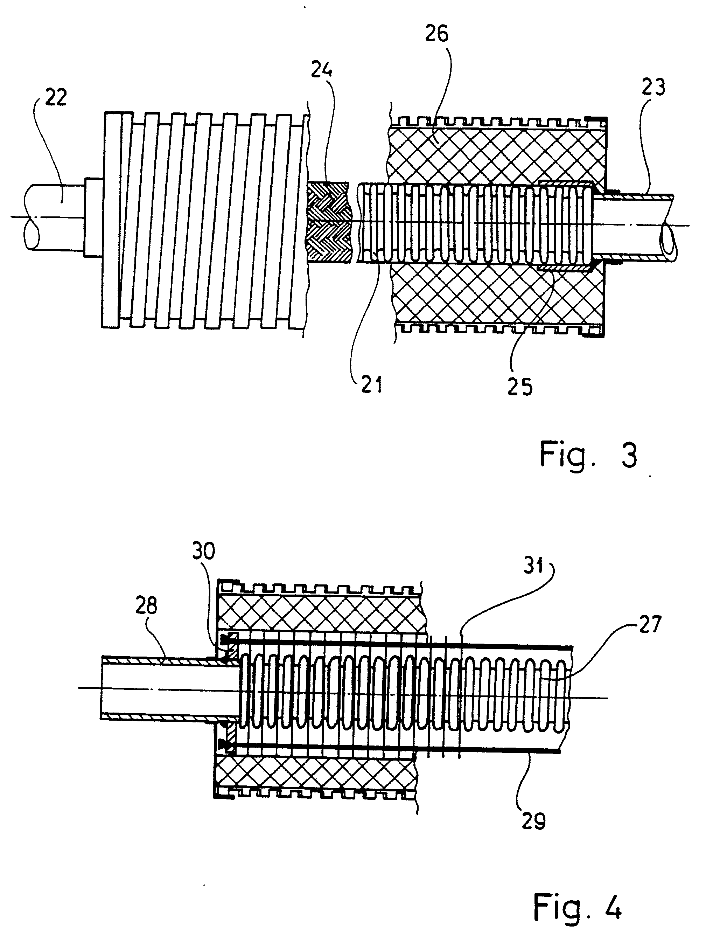

Bezüglich der Ausbildung derartiger Wellschläuche darf zunächst auf Figur 3 verwiesen werden, aus deren Halbschnittdarstellung ein metallener Wellschlauch 21 ersichtlich ist, der zwischen Anschlußenden 22 und 23 angeordnet von einem Geflechtsmantel 24 zur Abstützung auftretende Axialkräfte umgeben ist, welch letzterer über Hülsen 25 in der Regel durch eine Schweißverbindung an den Anschlußenden 22 und 23 festgelegt ist.

Der Geflechtsschlauch 24 ist durch eine Wärmeisolierung 26 umgeben, die ihrerseits noch eine Ummantelung in Form eines Agraffschlauches aufweist, durch die sie gegen äußere Einflüsse, insbesondere mechanische Belastungen geschützt ist.

Eine andere Konstruktion ist in Figur 4 veranschaulicht. Hier ist ein Wellschlauch 27 mit Anschlußenden 28 verbunden, wobei jedoch seine Axialabstützung durch Seile 29 erfolgt, die endständig an Widerlagern 30 befestigt sind, die ihrerseits fest beispielsweise durch Schweißen mit den Anschlußstutzen 28 verbunden sind. Die Seile 29 werden über in die Wellentäler des Wellschlauches 27 eingesetzte Scheibenelemente 31 parallel zum Wellschlauch 27 geführt und gehalten. Bezüglich weitere Einzelheiten dieser Konstruktion wird auf die DE-OS 3522334 verwiesen, die in soweit zum Gegenstand der vorliegenden Beschreibung gemacht wird.

Was die vorerwähnten gelenkigen Rohr- bzw. Schlauchleitungsverbindungen betrifft, so eignen sich hierfür die anhand der Figuren 3 und 4 geschilderten Ausführungsformen gleichermaßen, da sie bei entsprechend kurzer Ausbildung ohne weiteres einen Gelenkkompensator bzw. eine Gelenkverbindung darstellen können.

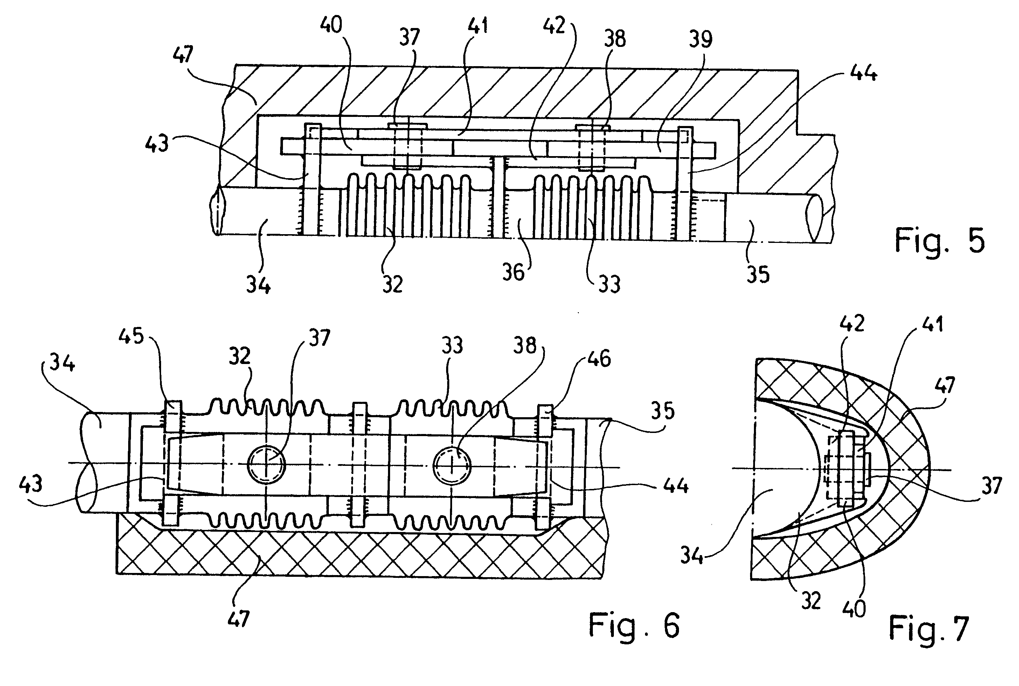

Eine weitere Möglichkeit für einen solchen Gelenkkompensator zeigt aber auch die Darstellung in den Figuren 5 bis 7. Hier sind Wellrohrstücke 32, 33 zwischen Rohranschlußstücken 34, 35 über ein Zwischenrohrstück 36 miteinander dicht verbunden. Dabei sind in bezüglich der Rohrachse diametral einander gegenüberliegender Weise je ein Gelenk 37, 38 dem jeweiligen Wellrohrstück zugeordnet, wobei die Gelenke der Verbindung von Armen 39, 40 sowie Doppelarmen 41, 42 dienen. Die Arme 39, 40 sind jeweils zwischen Rohrstutzen 34 bzw. 35 und Wellrohrstücken 32 bzw. 33 an radialen Stegen 43, 44 fest angebracht, während von dem Armpaar 41, 42 der Arm 42 fest mit dem Zwischenrohrstück 36 verbunden ist. Zur Aufteilung der auf diese Weise um die Gelenke 37, 38 auszuführenden Schwenkbewegung ist der Arm 41 an seinen Enden jeweils nur zwischen Anschlägen 45, 46 schwenkbar.

Die Gesamtkonstruktion ist durch einen Isoliermantel 47 zur Wärmeisolierung umgeben.

Die vorstehend beschriebene Konstruktion eines Gelenkkompensators entspricht im übrigen den auf diesem Gebiet bekannten Bauformen.

Eine weiter Variante zur Gestaltung des Wellschlauches sei abschließend noch im einzelnen erläutert.

Nach den vorstehenden Ausführungen ist im allgemeinen von einer kreisrunden Querschnittform des Wellschlauches ausgegangen worden. Hier besteht jedoch auch die Möglichkeit, den Wellschlauch mit einem ovalen Querschnitt zu versehen derart, das seine größere Querschnittsachse quer zu dem aus den Figuren 1 oder 2 ersichtlichen Krümmungsbogen angeordnet ist, der Wellschlauch also radial zu seinem Krümmungsbogen einen kleineren Querschnitt aufweist, als senkrecht dazu. Eine solche Querschnittgestaltung des Wellschlauches hat den Vorteil, daß der Wellschlauch seiner Krümmung einen geringeren Widerstand entgegensetzt, als dies bei einem kreisrunden Wellschlauch gleichen Gesamtquerschnittes der Fall wäre. Dadurch besteht die Möglichkeit, dem Wellschlauch eine noch kürzer Länge zu geben, als dies bereits vorstehend geschildert wurde.

Das gleiche Ziel kann dadurch erreicht werden, daß der Wellschlauch als Doppelschlauch ausgebildet wird, also aus zwei parallel zueinander angeordneten Schläuchen kleineren Querschnittes besteht, die jeder für sich einen geringeren Krümmungsradius erlauben, ohne daß dadurch eine Verkleinerung des gesamten Strömungsquerschnittes eintreten würde.

## Patentansprüche

1. Anschlußanordnung für den Wärmeträger von Solaranlagen mit einem entsprechend dem Sonnenstand um eine im wesentlichen horizontale Achse verschwenkbaren Spiegelsystem (1) zur Konzentration der Sonnenstrahlen auf eine dem Spiegelsystem (1) in dessen Brennachse gegenüberliegende und mit dem Spiegelsystem (1) entsprechend dem Tagesablauf auf einem Kreisbogen schwenkende Leitung (2), die von dem Wärmeträger durchströmt und über einen Wellschlauch (4) an ein mit seinem Ende im wesentlichen radial auf die Schwenkachse (3) zugerichtetes Leitungselement (5) angeschlossen ist, wobei die Krümmung des Wellschlauches (4) im Verlauf der Schwenkbewegung des Spiegelsystems (1) das Vorzeichen wechselt und wobei der Wellschlauch (4) axial abgestützt und von einer Wärmeisolierung umgeben ist, dadurch gekennzeichnet, daß die Leitung (2) im Bereich der der Mittagsstellung entsprechenden Schwenklage so auf dem Kreisbogen (9) angeordnet ist, daß der Wellschlauch (4) diametral durch die Schwenkachse (3) gehend bis zum Ende des Leitungselementes (5) verläuft, und daß das Ende des Leitungselementes (5) im wesentlichen radial zur Schwenkachse (3) verstellbar ist.

2. Anschlußanordnung nach Anspruch 1, dadurch gekennzeichnet, daß das Ende des Leitungselement (5) an einem im wesentlichen quer zu seiner Stellbewegung sich erstreckenden und gelenkig (7) mit einem ortsfesten Leitungsanschluß (8) verbundenen Schwenkarm (6) in Form einer starren Rohrleitung angeordnet ist.

3. Anschlußanordnung nach Anspruch 1, dadurch gekennzeichnet, daß der Wellschlauch (4) mit dem Ende des Leitungselementes (5) über ein Gelenk (12) verbunden ist.

4. Anschlußanordnung nach Anspruch 1, dadurch gekennzeichnet, daß der Wellschlauch (4) mit der Leitung (2) über ein Gelenk verbunden ist.

5. Anschlußanordnung nach Anspruch 1, dadurch gekennzeichnet, daß der Wellschlauch (4) ein Ringwellschlauch aus Metall ist.

6. Anschlußanordnung nach einem der Ansprüche 2 bis 4, dadurch gekennzeichnet, daß das Gelenk (7, 12) durch wenigstens einen Angular-Kompensator gebildet ist.

7. Anschlußanordnung nach Anspruch 6, dadurch gekennzeichnet, daß der Angularkompensator bezüglich seines möglichen Schwenkwinkels durch Anschläge (45, 46) begrenzt ist.

8. Anschlußanordnung nach Anspruch 2, dadurch gekennzeichnet, daß das Gelenk (7, 12) durch einen mit einer Wärmeisolierung (26, 47) versehenen Ringwellschlauch mit Umflechtung (24) oder einen Ringwellschlauch mit Seilabstützung (29, 31) gebildet ist.

9. Anschlußanordnung nach Anspruch 2, dadurch gekennzeichnet, daß die Bewegung des Schwenkarmes (6) von der Schwenkachse (3) fort durch einen Anschlag (10) begrenzt ist.

10. Anschlußanordnung nach Anspruch 9, dadurch gekennzeichnet, daß der Schwenkarm (6) in Richtung auf den Anschlag (10) feder- (11) oder gewichtsbelastet ist.

11. Anschlußanordnung nach einem der vorhergehenden Ansprüche, dadurch gekennzeichnet, daß der Wellschlauch einen ovalen Querschnitt aufweist, wobei die größere Querschnittsachse quer zur Krümmung des Wellschlauches angeordnet ist.

12. Anschlußanordnung nach einem der vorhergehenden Ansprüche, dadurch gekennzeichnet, daß der Wellschlauch als Doppelschlauch ausgebildet ist, hierbei die beiden Einzelschläuche quer zur Krümmung des Wellschlauches nebeneinander angeordnet sind.

## Claims

1. A connection arrangement for the heat carriers of solar plants with a mirror system (1) pivotable about an essentially horizontal axis corresponding to the position of the sun in order to concentrate the sun's rays on a duct (2) which lies on the focal axis of and oppositely to the mirror system (1) and which pivots with the latter along a circular arc corresponding to the course of the day, the heat carrier flowing through the duct which is connected via a corrugated hose (4) to a duct element (5) directed with its end essentially radially of the pivotal axis (3), wherein the curvature of the corrugated hose (4) to a duct element (5) directed with its end essentially radially of the pivotal axis (3), wherein the curvature of the corrugated hose (4) changes its mathematical sign in the course of the pivotal movement of the mirror system (1) and wherein the corrugated hose (4) is axially supported and is surrounded by heat insulation, characterised in that the duct (2) is so arranged on the circular arc (9) in the vicinity of the pivotal position corresponding to the midday position that the corrugated hose (4) extends diametrally through the pivotal axis (3) to the end of the duct element (5), and that the end of the duct element (5) is adjustable essentially radially towards the pivotal axis (3).

2. A connection arrangement according to claim 1, characterised in that the end of the duct element (5) is arranged at a pivot arm (6) in the form of a rigid pipe extending essentially transversely to its adjustment movement and articulatedly (7) connected with a stationery pipe coupling (8).

3. A connection arrangement according to claim 1, characterised in that the corrugated hose (4) is connected with the end of the duct element (5) via a hinge joint (12).

4. A connection arrangement according to claim 1, characterised in that the corrugated hose (4) is connected with the duct (2) via a hinge joint.

5. A connection arrangement according to claim 1, characterised in that the corrugated hose (4) is a metallic annular corrugated hose.

6. A connection arrangement according to one of claims 2 to 4, characterised in that the hinge joint (7, 12) is formed by at least one angular compensator.

7. A connection arrangement according to claim 6, characterised in that the angular compensator is limited relative to its possible pivot angle by stops (45, 46).

8. A connection arrangement according to claim 2, characterised in that the hinge joint (7, 12) is formed by an annular corrugated hose provided with heat insulation (26, 47) with braided sheathing or by an annular corrugated hose with cable support (29, 31).

9. A connection arrangement according to claim 2, characterised in that the movement of the pivot arm (6) beyond the pivotal axis (3) is limited by a stop (10).

10. A connection arrangement according to claim 9, characterised in that the pivot arm (6) is spring (11)-loaded or weight-loaded in the direction of the stop (10).

11. A connection arrangement according to one of the preceding claims, characterised in that the corrugated hose has an oval cross-section in which the larger cross-sectional axis is arranged transversely of the curvature of the corrugated hose.

12. A connection arrangement according to one of the preceding claims, characterised in that the corrugated hose is formed as a double hose, with the two individual hoses being arranged next to each other transversely of the curvature of the corrugated hose.

## Revendications

1. Dispositif de raccordement pour le caloporteur de collecteurs solaires possédant un système à miroir (1) susceptible d'être animé d'un mouvement de pivotement autour d'un axe sensiblement horizontal et servant à concentrer les rayons solaires sur une conduite (2) située en face du système à miroir (1) dans l'axe focal de celui-ci et pivotant avec le système à miroir (1) sur un arc de cercle suivant l'avancement de la journée, la conduite étant parcourue par le caloporteur et raccordée par un tuyau flexible ondulé (4) à un élément de conduite (5) dont l'extrémité est dirigée à peu près radialement vers l'axe de pivotement (3), dispositif de raccordement dans lequel la courbure du tuyau ondulé (4) change de signe au cours du mouvement de pivotement du système à miroir (1) et dans lequel le tuyau ondulé (4) est soutenu axialement et entouré d'une isolation thermique, caractérisé en ce que, aux environs de la position en pivotement correspondant à la position de midi, la conduite (2) est disposée sur l'arc de cercle (9) de manière que le tuyau ondulé (4) s'étende diamétralement à travers l'axe de pivotement (3) jusqu'à l'extrémité de l'élément de conduite (5), et que l'extrémité de l'élément de conduite (5) est déplaçable essentiellement en direction radiale par rapport à l'axe de pivotement (3).

2. Dispositif de raccordement selon la revendication 1, caractérisé en ce que l'extrémité de l'élément de conduite (5) est placée sur un bras pivotant (6), sous la forme d'un tuyau rigide, qui s'étend pour l'essentiel transversalement au mouvement de déplacement de cette extrémité et est relié de façon articulée (7) à un raccord de conduite fixe (8).

3. Dispositif de raccordement selon la revendication 1, caractérisé en ce que le tuyau ondulé (4) est relié à l'extrémité de l'élément de conduite (5) par une articulation (12).

4. Dispositif de raccordement selon la revendication 1, caractérisé en ce que le tuyau ondulé (4) est relié à la conduite (2) par une articulation.

5. Dispositif de raccordement selon la revendication 1, caractérisé en ce que le tuyau ondulé (4) est un tuyau à ondulation annulaire en métal.

6. Dispositif de raccordement selon une des revendications 2 à 4, caractérisé en ce que l'articulation (7, 12) est formé par au moins un compensateur angulaire.

7. Dispositif de raccordement selon la revendication 6, caractérisé en ce que l'angle de pivotement possible du compensateur angulaire est limité par des butées (45, 46).

8. Dispositif de raccordement selon la revendication 2, caractérisé en ce que l'articulation (7, 12) est formée par un tuyau flexible à ondulations annulaires pourvu d'une isolation thermique (26, 47) et comportant une tresse (24) ou des câbles de soutien (29, 31).

9. Dispositif de raccordement selon la revendication 2, caractérisé en ce que le mouvement du bras pivotant (6) dans le sens de l'éloignement de l'axe de pivotement (3) du système à miroir est limité par une butée (10).

10. Dispositif de raccordement selon la revendication 9, caractérisé en ce que le bras pivotant (6) est chargé par un ressort (11) ou par un poids en direction de la butée (10).

11. Dispositif de raccordement selon une des revendications précédentes, caractérisé en ce que le tuyau ondulé possède une section droite ovale dont le grand axe est orienté transversalement à la courbure du tuyau ondulé.

12. Dispositif de raccordement selon une des revendications précédentes, caractérisé en ce que le tuyau ondulé est réalisé sous forme d'un tuyau double dont les tuyaux élémentaires sont placés l'un à côté de l'autre dans le sens transversal à la courbure du tuyau ondulé.

Fig. 1

Fig. 2

EP 0 377 140 B1

Fig. 3

Fig. 4

11

Fig. 5

Fig. 6

Fig. 7

EP 0 377 140 B1